# EUROPEAN PATENT SPECIFICATION

(11) **EP 3 663 689 B1**
(45) Date of publication and mention of the grant of the patent: **16.02.2022**
(21) Application number: 19183143.7
(22) Date of filing: 28.06.2019
(51) Int. Cl.: F28D 7/02, F28F 1/24, F24H 1/43, F24H 1/16, F16L 21/02, F28F 9/26, F28F 9/02, F28D 21/00, F16L 51/00, F16L 21/035, F16L 27/12, F16L 21/03

(54) **HEAT EXCHANGER**
WÄRMETAUSCHER
ÉCHANGEUR DE CHALEUR

(30) Priority: 07.12.2018 US 201816213930
(43) Date of publication of application: 10.06.2020
(73) Proprietor: Intellihot, Inc., Galesburg, IL 61401 (US)
(72) Inventor: DEIVASIGAMANI, Sridhar, Peoria, IL 61615 (US); AKASAM, Sivaprasad, Dunlap, IL 61525 (US)
(74) Representative: inCompass IP Europe Limited

(56) References cited:
- EP-A2- 0 825 392
- DE-A1- 19 838 588
- DE-A1-102016 108 312
- JP-A- 2010 048 424
- US-A1- 2004 035 565
- US-A1- 2017 343 144

## Description

### PRIORITY CLAIM AND RELATED APPLICATIONS

This continuation-in-part application claims the benefit of priority from non-provisional application U.S.S.N. 15/903,544 filed on February 23, 2018 which in turn claims the benefit of priority from provisional application U.S.S.N. 62/463,584 filed February 24, 2017.

### BACKGROUND OF THE INVENTION

### 1. The Field of the Invention

The present invention relates to a heat exchanger. More specifically, the present invention is directed to a heat exchanger having a weld-free connection of a heat exchange tubing to its connecting tubings one on each end of the heat exchange tubing.

### 2. Background Art

In a tankless fluid heating system, it is critical to have a responsive heat exchanger as the fluid supplied to its end user is not previously heated and stored to anticipate a future demand. In a fluid heater that functions by transferring heat from a heated gas to a fluid flow that is heated before being supplied to its user, the responsiveness of the fluid heater is directly tied to the amount of delay a user experiences between the time a fluid demand is requested to the time the fluid demand is actually delivered to the user. When a new demand arises after a lull in demand, heat is again transferred from a heat source to a fluid flow via a heat exchange tubing in which the fluid flow is contained. As heat obtained via such means must be transferred via conduction via the heat exchange tubing to the fluid flow, it is imperative to select a heat exchange tubing with high thermal conductivity. Various strategies have been devised to increase the responsiveness of a fluid heating system. In cases where the number of heat exchange tubings have been increased to enlarge the surface area for heat transfer, such increase requires that many more tubings be added to supply the same amount of fluid per unit time. Often times, these heat exchange tubings are welded to their connecting tubings by conventional welding techniques, e.g., arc welding, etc., making them susceptible to stress corrosion cracking even when the heat exchange and their corresponding connecting tubings have been made of stainless steel. A heat exchange tubing that is held rigidly in place lacks the ability to thermally expand and contract freely, causing stresses to be built up and relieved repeatedly over time. Eventually each weld joint or another type of rigid joint becomes a leak risk which in turn increases the required maintenance frequency and cost.

US2017/343144 discloses a heat exchanger according to the preamble of claim 1, comprising a fluid connector assembly in which a flat tube is received within a bore of the fluid connector assembly such that an end of the flat tube is in surface to surface contact with first shoulders which establish a stopping point for the insertion of the flat tube into the bore. The fluid connector assembly includes an adapter which lockingly connects a connector body of the fluid connector assembly with the flat tube. Male and female locking structures are provided to lock the flat tube to the connector body.

DE102016108312 discloses a heat exchanger in which a locking element when inserted into an opening of the heat exchanger and the heat exchanger is rotated clockwise 90 degrees with respect to the locking element locks an exchanger tube such that the exchanger tube cannot move in axial or radial directions.

DE19838588 discloses a connection clip for a pipe connection between a collector of a motor vehicle heat exchanger and a pipe which conducts the internal heat exchange fluid to the collector or discharges it from the collector. The clip connects the pipe securely to a pipe joint of the collector of the motor vehicle heat exchanger. There exists a need for a fluid heating system that is long lasting and one which does not require frequent maintenance or one which does not require maintenance of the heat exchange tubing or replacement of the heat exchange tubing/s throughout the useful life of the fluid heating system.

### SUMMARY OF THE INVENTION

In accordance with the present invention, there is provided a heat exchanger according to claim 1, including:
(a) a fluid conductor including a heat exchange tubing including a first end and a lumen; and
(b) a first connecting tubing including an outer surface, a lumen and a first sealing ring disposed about the outer surface of the first connecting tubing, wherein the first connecting tubing is configured for insertion into the lumen of the heat exchange tubing at the first end such that the first sealing ring comes in sealing engagement with the first connecting tubing and the heat exchange tubing to thereby form a floating connection between said heat exchange tubing at said first end and said first connecting tubing, said floating connection allowing relative movement between the heat exchange tubing and the first connecting tubing when the heat exchange tubing expands or contracts along at least its length when subjected to thermal fluctuations and a fluid flow is confined within a lumen formed of the lumen of the first connecting tubing and the lumen of the heat exchange tubing.

In one embodiment, the fluid conductor further includes a second end and the heat exchanger further includes a second connecting tubing including an outer surface and a second sealing ring disposed about the outer surface of the second connecting tubing, wherein the second connecting tubing is configured for insertion into the lumen of the heat exchange tubing at the second end such that the second sealing ring comes in sealing engagement with the second connecting tubing and the heat exchange tubing to thereby form a floating connection between said heat exchange tubing at said second end and said second connecting tubing, said floating connection allowing relative movement between the heat exchange tubing and the second connecting tubing when the heat exchange tubing expands or contracts along at least its length when subjected to thermal fluctuations and the fluid flow is confined within said second connecting tubing and the heat exchange tubing.

In further examples not within the scope of the present invention, there is provided a heat exchanger including:
(a) a fluid conductor including a heat exchange tubing including a lumen, a first end, an outer surface and a first sealing ring disposed about the outer surface at the first end; and
(b) a first connecting tubing including a lumen,
wherein the first end of the heat exchange tubing is configured for insertion into the lumen of the first connecting tubing such that the first sealing ring comes in sealing engagement with the first connecting tubing and the heat exchange tubing while allowing relative movement between the heat exchange tubing and the first connecting tubing and a fluid flow is confined within a lumen formed of the lumen of the first connecting tubing and the lumen of the heat exchange tubing.

In one embodiment, the heat exchange tubing further includes a second end and a second sealing ring disposed about the outer surface at the second end and the heat exchanger further includes a second connecting tubing including a lumen, wherein the second end of the heat exchange tubing is configured for insertion into the lumen of the second connecting tubing such that the second sealing ring comes in sealing engagement with the second connecting tubing and the heat exchange tubing while allowing relative movement between the heat exchange tubing and the second connecting tubing and the fluid flow is confined within the second connecting tubing and the heat exchange tubing.

In one embodiment, the first connecting tubing further includes a central axis and a groove disposed about the central axis on the outer surface of the first connecting tubing, the groove configured for receiving the first sealing ring and retaining the first sealing ring in place to prevent relative motion of the first sealing ring relative to the first connecting tubing. In one embodiment, the heat exchange tubing further includes an outer surface and the heat exchange tubing further includes a plurality of fins each extending from the outer surface of the heat exchange tubing. In one embodiment, each of the plurality of fins includes a thickness and a height and the thickness of at least one of the plurality of fins is about 0.5 mm and the height of the at least one of the plurality of fins is no more than about 10 mm. In one embodiment, the heat exchange tubing further includes a wall thickness of no more than 1.2 mm. In one embodiment, the heat exchange tubing further includes an outer surface and the plurality of fins extend from the heat exchange tubing by attaching the plurality of fins to the outer surface of the heat exchange tubing by laser welding. In one embodiment, the heat exchange tubing and the plurality of fins are constructed from the same material. In one embodiment, the same material is stainless steel.

In further examples not within the scope of the present invention, there is provided a heat exchanger for heating a fluid flow, the heat exchanger including:
(a) a coil including a top section, a bottom section, a top end, a bottom end and a lumen, the coil configured for receiving the fluid flow at one of the top end and bottom end of the coil and channeling the fluid flow to the other one of the top end and bottom end, wherein the lumen at the top section is configured for receiving a heated gas urged to flow in a direction from the top section of the coil to the bottom section of the coil;
(b) a shroud including a side wall, the side wall including an upper section and a lower section, at least one opening disposed on the upper section of the side wall, wherein the top section of the coil is disposed within the upper section of the shroud and the at least one opening is configured to be aligned with a coil loop of the coil and allows a portion of the heated gas to flow around the coil loop and through the at least one opening to enter a space outside of the shroud, wherein the fluid flow is configured to receive heat from the heated gas flowing around the coil loop; and
(c) at least one aperture disposed at the lower section of the side wall, the at least one aperture configured to allow the portion of the heated gas to reenter the shroud at the lower section of the side wall from the space outside of the shroud to continue heating the bottom section of the coil.

In one embodiment, the at least one opening varies in size from the upper section of the side wall to the lower section of the side wall. In one embodiment, the at least one opening decreases in size from the upper section of the side wall to the lower section of the side wall. In one embodiment, the at least one opening is a slit or a hole or any combination thereof. In one embodiment, the upper section of the shroud is substantially isolated from the lower section of the shroud. In one embodiment, the heated gas is provided by a burner. In one embodiment, the shroud further includes a lumen and at least one drain hole disposed at a bottom edge of the lower section of the shroud and the at least one drain hole is configured for allowing draining of condensate from outside of the shroud to the lumen of the shroud. In one embodiment, the heat exchanger further includes an exhaust pointed in a direction, wherein the at least one opening is configured to decrease in size in the direction.

An object of the present invention is to provide a heat exchanger free from one or more heat exchange tubings that are welded to any connecting tubes.

Another object of the present invention is to provide a heat exchanger free from one or more heat exchange tubings that are welded according to conventional welding practices.

Another object of the present invention is to provide a heat exchanger free from one or more heat exchange tubings that are brazed or soldered.

Another object of the present invention is to provide a heat exchanger that is corrosion resistant.

Another object of the present invention is to provide a heat exchanger having a heat exchange tubing that receives heat flux evenly along its length.

Whereas there may be many embodiments of the present invention, each embodiment may meet one or more of the foregoing recited objects in any combination. It is not intended that each embodiment will necessarily meet each objective. Thus, having broadly outlined the more important features of the present invention in order that the detailed description thereof may be better understood, and that the present contribution to the art may be better appreciated, there are, of course, additional features of the present invention that will be described herein and will form a part of the subject matter of this specification.

### BRIEF DESCRIPTION OF THE DRAWINGS

In order that the manner in which the above-recited and other advantages and objects of the invention are obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
FIG. 1 is a diagram depicting a cross-sectional view of a heat exchanger, coil or heat exchange tubing, depicting a heat exchange tubing used in heating a fluid flow.
FIG. 2 depicts a heat exchange tubing and a means for connecting it to a heat exchanger without welds.
FIG. 3 is a partial cross-sectional view of a connection depicting a manner in which one end of a heat exchange tubing is connected to a connecting tubing of a heat exchanger.
FIG. 4 is a partial cross-sectional view of a connection depicting a manner in which one end of a heat exchange tubing is connected to a connecting tubing of a heat exchanger.
FIG. 5 is a partial cross-sectional view of a connection depicting a manner in which one end of a heat exchange tubing is connected to a connecting tubing of a heat exchanger.
FIG. 6 depicts a heat exchange tubing and a means for connecting it to a heat exchanger without welds.
FIG. 7 is a partial cross-sectional view of a connection depicting a manner in which one end of a heat exchange tubing is connected to a connecting tubing of a heat exchanger.
FIG. 8 is a partial cross-sectional view of one end of a heat exchange tubing depicting fins attached to the tubing.
FIG. 9 is a partial close-up cross-sectional view of a fin attached to an outer surface of a heat exchange tubing.
FIG. 10 is a partial cross-sectional view of connections depicting the manner in which two ends of a heat exchange tubing are connected to connecting tubings of a heat exchanger.
FIG. 11 is a partial cross-sectional view of a connection depicting a manner in which one end of a heat exchange tubing is connected to a connecting tubing of a heat exchanger.
FIG. 12 is a partial cross-sectional view of a connection depicting a manner in which one end of a heat exchange tubing is connected to a connecting tubing of a heat exchanger.
FIG. 13 is a cross-sectional view of a heat exchanger, depicting a shroud coupled with a heat exchange tubing to enhance heat transfer to fluid to be heated in the heat exchanger.
FIG. 14 is a cross-sectional view of a heat exchanger, depicting a shroud coupled with a heat exchange tubing to enhance heat transfer to a fluid to be heated in the heat exchanger and with parts removed to more clearly reveal the shroud.
FIG. 15 is a cross-sectional view of yet another embodiment of a heat exchanger, depicting a shroud coupled with a heat exchange tubing to enhance heat transfer to a fluid to be heated in the heat exchanger and with parts removed to more clearly reveal the shroud.

### PARTS LIST

- 2 -: fluid conductor
- 4 -: fin
- 6 -: end of fluid conductor
- 8 -: connecting tubing
- 10 -: wall thickness of fluid conductor
- 12 -: thickness of fin
- 14 -: height of fin
- 16 -: lumen diameter
- 18 -: distance between fins
- 20 -: fluid
- 22 -: sealing ring
- 24 -: groove
- 26 -: union
- 28 -: fluid flow
- 30 -: blower
- 32 -: flue flow
- 34 -: condensate flow
- 36 -: exhaust
- 38 -: burner
- 40 -: drain hole
- 42 -: weld seam
- 44 -: central axis of heat exchange tubing
- 46 -: central axis of connecting tubing
- 48 -: lip
- 50 -: lip
- 52 -: outer shell
- 54 -: guide system
- 56 -: shroud
- 58 -: opening, e.g., slit
- 60 -: aperture
- 62 -: shelf
- 64 -: edge of shelf
- 66 -: coil loop
- 68 -: coil loop
- 70 -: opening
- 72 -: opening
- 74 -: opening
- 76 -: one end of annular plate with opening
- 78 -: another end of annular plate with opening

### PARTICULAR ADVANTAGES OF THE INVENTION

The present heat exchanger is free of fluid conductors joined with conventional welding thereby eliminating the possibility of stress corrosion cracking associated with weld joints formed of conventional welding. Each conventional weld joint is a corrosion and leak risk.

The present heat exchanger is robust against thermal cycles as it allows for expansion and contraction of the heat exchange tubing.

The present heat exchanger includes a low mass heat exchange tubing that allows rapid response to varying flows within the heat exchange tubing.

The present heat exchanger includes a large passage that allows large flows and minimizes pressure drop and calcium carbonate scale deposits.

The present heat exchanger includes a heat exchange tubing that is disposed with a lumen that is disposed upright and a blower that causes a flue flow that urges condensate to drip downwardly and away from the heat exchange tubing, thereby causing the heat exchanger to self-clean during the course of normal operation of the heat exchanger.

In one embodiment, the present heat exchanger includes a heat exchange tubing that is not fixed in its position in either end. Therefore, any thermal expansions and contractions in the tubing are not restricted such that thermal cyclic stresses do not develop in the tubing.

### DETAILED DESCRIPTION OF A PREFERRED EMBODIMENT

The term "about" is used herein to mean approximately, roughly, around, or in the region of. When the term "about" is used in conjunction with a numerical range, it modifies that range by extending the boundaries above and below the numerical values set forth. In general, the term "about" is used herein to modify a numerical value above and below the stated value by a variance of 20 percent up or down (higher or lower).

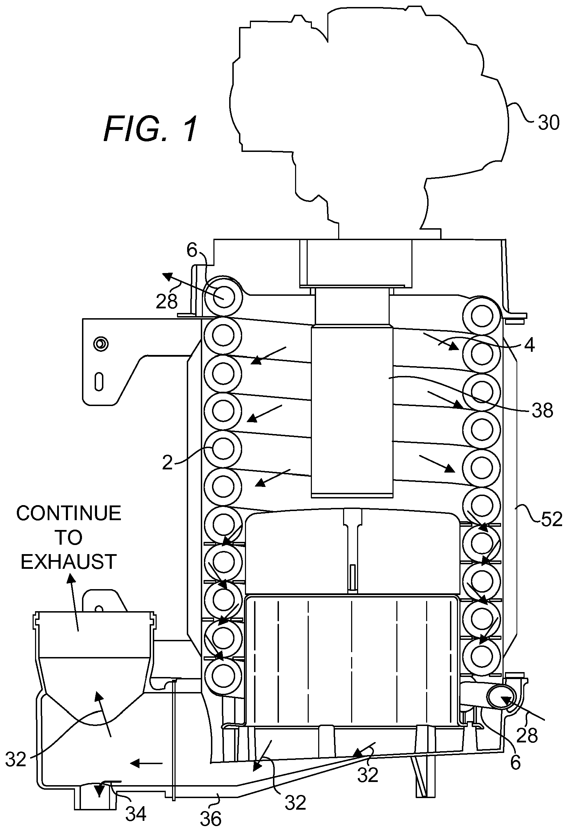

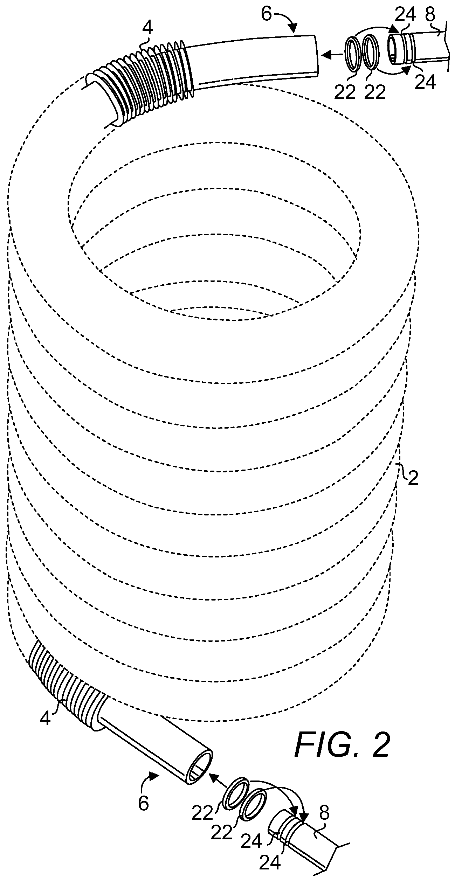

FIG. 1 is a diagram depicting a cross-sectional view of a heat exchanger, depicting a fluid conductor, coil or heat exchange tubing 2 used in heating a fluid flow 28. The diagram essentially shows a heat exchanger having a coil disposed in a housing where the coil is useful for receiving a fluid flow at one end of the coil to be heated in the coil before the fluid flow exits at another end of the coil. Also shown is a path for a heated gas flow that traverses the heat exchanger before exiting at an exhaust. FIGs. 2-12 depict various embodiments of an interface each end of the coil 2 makes with a fluid conductor that sends a fluid flow to be heated in the coil 2 and allows the heated fluid flow to be sent to one or more points of demand of the fluid flow. The present heat exchanger includes a fluid conductor that is disposed in a coil format where the coil has a lumen that is weld-free. It shall be noted that as the lumen of the coil 2 and the portions of the connecting tubings 8 exposed to a fluid flow traversing the coil 2 are weld-free, any tendency for parts of the heat exchanger that come in contact with the fluid flow to corrode is eliminated. The coil need not be a helical coil with a circular cross-sectional profile. A coil of another shape and cross-sectional profile of another shape, e.g., rectangular, oval, etc., are possible as long as the fluid conductor remains capable of thermally expanding and contracting along at least its length to avoid cracking in the fluid conductor due to thermal fluctuations. In the embodiment shown, a blower 30 sends an air-fuel mixture flow through a burner 38 which generates a flue flow 32 through the fluid conductor 2 and exits through exhaust 36 although the heat exchanger may alternatively or additionally receive any heated gas flow. In this condensing heat exchanger, condensate is generated and moved in a direction of the flue flow around the fluid conductor 2 within an outer shell 52 to form a condensate flow 34 that exits via a drain to a condensate neutralizer or a condensate collector.

As the fluid conductor 2 expands in length and radially as it is heated and contracts in the same directions as it is cooled, a fluid conductor that is not restricted in its length and its radial direction does not develop stresses that would otherwise exist in a fluid conductor that is restricted at least at one of its ends. FIG. 2 depicts a heat exchange tubing 2 and a means for connecting it to a heat exchanger without welds where the heat exchange tubing 2 is not restricted on either end 6 of the tubing 2. Essentially the fluid conductor includes a heat exchange tubing 2 having a first end 6, a second end 6 and a lumen and is connected at the first end to a first connecting tubing 8 including an outer surface and two sealing rings 22 although only one sealing ring 22 is required. The outer sealing ring 22 serves as a backup in case the inner sealing fails. A sealing ring 22 may be constructed from rubber, polymeric material or another resilient and corrosion-resistant material, etc. Each sealing ring 22 is disposed about the outer surface of the first connecting tubing, fully encompassing at least a lengthwise portion of the first connecting tubing 8. At the second end 6 of the heat exchange tubing 2, a similar configuration is made between the heat exchange tubing 2 and a second connecting tubing 8 although one of the two ends may be connected with conventional pipe joining techniques, e.g., with complementary threads, etc., as the configuration will only partially restrict the heat exchange tubing at one end as the restricted end expands or contracts both in length and radially when subjected to thermal fluctuations. The first connecting tubing 8 is configured for insertion into the lumen of the heat exchange tubing 2 at the first end such that each sealing ring 22 comes in sealing engagement with the first connecting tubing and the heat exchange tubing 2 while allowing relative movement between the heat exchange tubing 2 and the first connecting tubing 8. The second connecting tubing 8 is configured for insertion into the lumen of the heat exchange tubing 2 at the second end such that each sealing ring 22 comes in sealing engagement with the second connecting tubing 8 and the heat exchange tubing 2 while allowing relative movement between the heat exchange tubing 2 and the second connecting tubing 8. Fluid flow between the first connecting tubing 8 and the second connecting tubing 8 is confined within the heat exchange tubing 2 and the first connecting tubing 8. As neither end of the heat exchange tubing 2 is rigidly connected to a connecting tubing, the heat exchange tubing 2 is said to have a "floating" connection to the connecting tubings. The heat exchange tubing 2 includes an outer surface and a plurality of fins 4 each extending from the outer surface of the heat exchange tubing. Fins 4 may be formed from round plates with their cores punched out or otherwise removed such that each can be disposed on an outer surface of the heat exchange tubing before it is laser welded to the heat exchange tubing. Fins 4 may also be formed from a single continuous strip of material that is formed in a spiral that can be disposed over an outer surface of the heat exchange tubing before the spiral is laser welded along areas that come in contact with the heat exchange tubing.

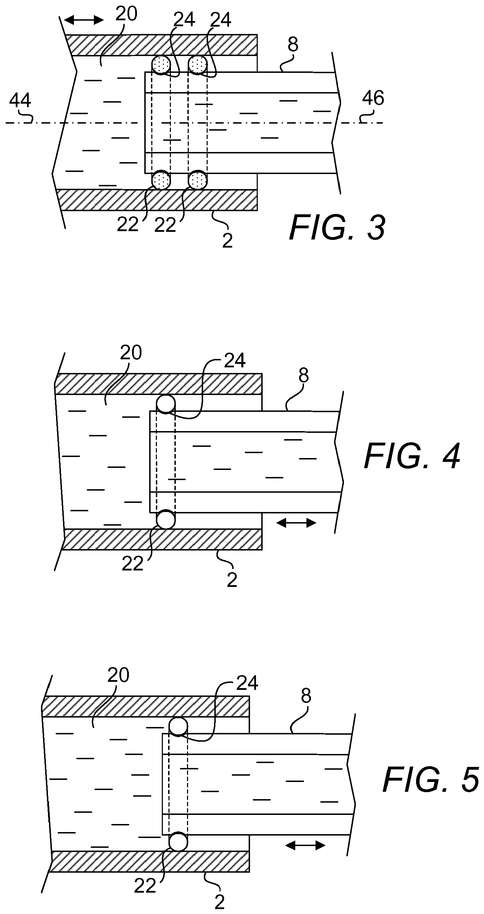

FIG. 3 is a partial cross-sectional view of a connection depicting a manner in which one end of a heat exchange tubing is connected to a connecting tubing of a heat exchanger. The connecting tubing 8 includes a central axis 46 and a groove disposed about the central axis 46 on the outer surface of the connecting tubing 8. Two grooves are shown disposed on an outer surface of the connecting tubing 8. These grooves 24 aid in retaining sealing rings 22 in place to prevent relative motion of the sealing rings relative to the connecting tubing 8, allowing only relative motion between the rings 22 and an inner surface of the heat exchange tubing 2. FIG. 4 is a partial cross-sectional view of a connection depicting a manner in which one end of a heat exchange tubing is connected to a connecting tubing of a heat exchanger. It shall be noted that, here, only one sealing ring 24 is used. FIG. 5 is a partial cross-sectional view of a connection depicting a manner in which one end of a heat exchange tubing is connected to a connecting tubing of a heat exchanger. Note that the heat exchange tubing 2 has moved relative to the connecting tubing 8 when compared to its position shown in FIG. 4.

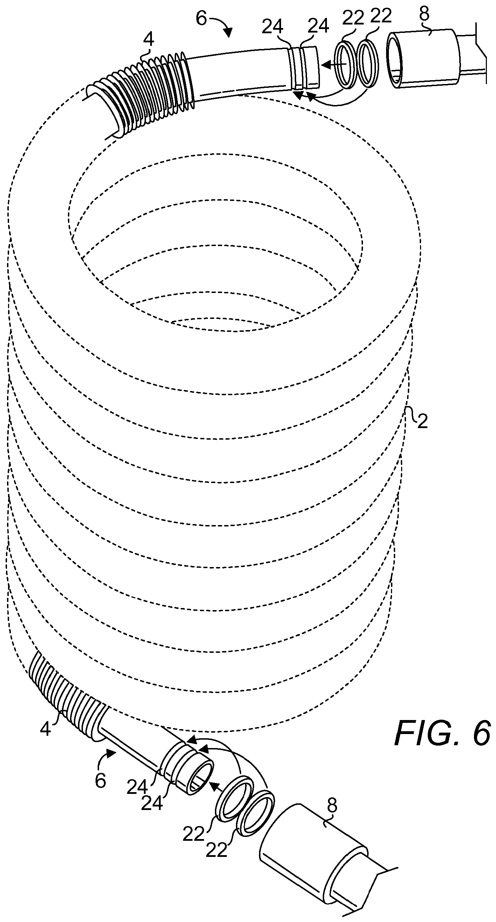

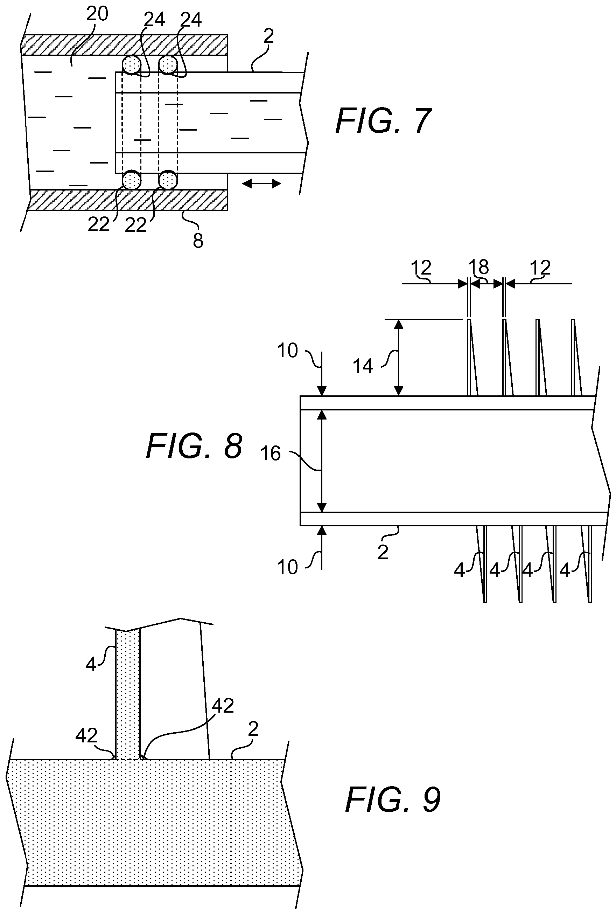

FIG. 6 depicts a heat exchange tubing and a means for connecting it to a heat exchanger without welds. FIG. 7 is a partial cross-sectional view of a connection depicting a manner in which one end of a heat exchange tubing is connected to a connecting tubing of a heat exchanger. It shall be noted that the heat exchange tubing 2 is similar to the heat exchange tubing 2 disclosed in FIG. 2, except in FIG. 6, the exchange tubing 2 is configured such that each of its ends 6 is configured to be inserted in a connecting tubing 8.

FIG. 8 is a partial cross-sectional view of one end of a heat exchange tubing 2 depicting a plurality of fins 4 attached to the tubing. FIG. 9 is a partial close-up cross-sectional view of a fin attached to an outer surface of a heat exchange tubing 2. Each fin 4 includes a thickness 12 of about 0.5 mm and a height 14 of no more than about 10 mm and two consecutive fins 4 are disposed a distance 18 of from about 1.95 mm apart for a 13 fins per inch configuration to about 2.82 mm apart for a 9 fins per inch configuration. In one embodiment, the heat exchange tubing further includes a lumen diameter 16 of from about 17.6 mm to about 37.6 mm and a wall thickness 10 of no more than about 1.2 mm. This minimal wall thickness and fin thickness and suitably large fin height together allow for a heat exchange tubing that is low in mass per unit heat transfer surface area, improving heat transfer between heat from the air side or outside of the heat exchange tubing to the water side or the fluid in tubing 2. For each unit of the heat that is to be transferred to the fluid in tubing 2, only a small amount of heat is required to be spent on heating tubing 2, making the tubing 2 a suitable conductor for a responsive heat exchange as heat can be quickly transferred to the fluid in tubing 2. In one embodiment, the heat exchange tubing further includes an outer surface and the plurality of fins extend from the heat exchange tubing by attaching the plurality of fins to the outer surface of the heat exchange tubing by laser welding. Other techniques are also possible, e.g., by crimping fins onto an outer surface of a tubing, by welding, brazing or soldering with conventional welding (e.g., arc welding), brazing or soldering techniques. However, these techniques are incapable of forming heat exchange materials having thermal resistance as low as the materials used herein. Further, the results of brazing and soldering are uncontrollable and joints that are smooth or joints that are incapable of trapping contaminants are rare. Further, in some prior applications, dissimilar metals are coupled together, e.g., copper or aluminum fins are coupled with carbon steel which tend to cause premature failure in these coupled parts as the chosen metals are not rust resistance in addition to the tendency to corrode due to the presence of an electrolyte in the fluid being heated or in the flue gas that comes in contact with the outer surfaces of the tubing 2. Further, although copper and aluminum may be good thermal conductors, they can corrode just as carbon steel can corrode. Laser welding results in small heat-affected zones and weld seams 42 that are relatively smooth, predictable and incapable of trapping contaminants, e.g., from flue gas, etc. Crevices formed in joints formed using other techniques increase surface area or areas for trapping moisture or condensate that may flow over them and enhance corrosion. In one embodiment, the heat exchange tubing and the plurality of fins are constructed from the same material to avoid any potential occurrences of dissimilar metal corrosion. In one embodiment, stainless steel is used herein to avoid corrosion.

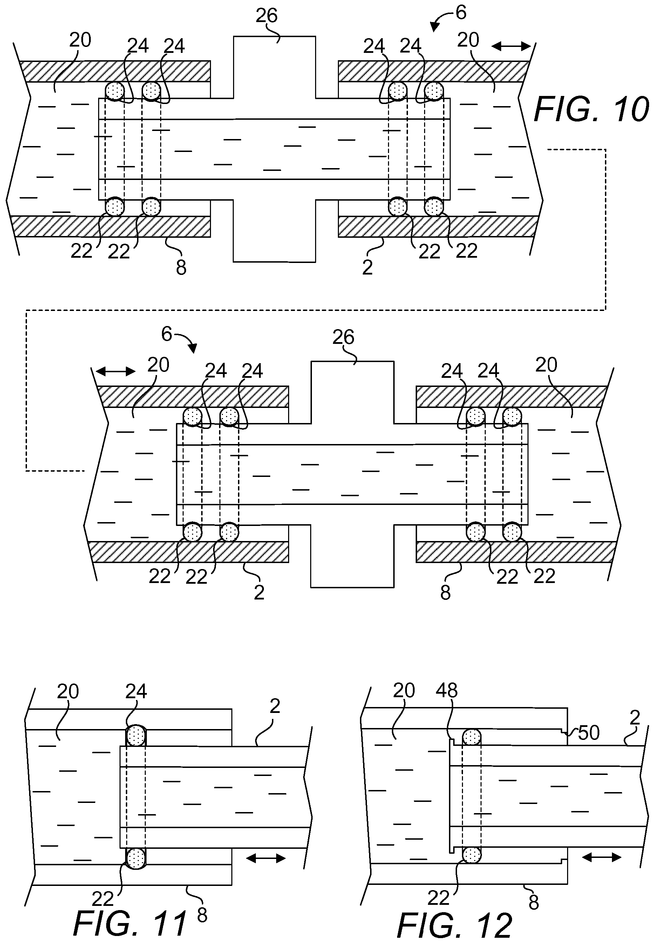

FIG. 10 is a partial cross-sectional view of connections depicting a manner in which two ends of a heat exchange tubing is connected to connecting tubings 8 of a heat exchanger. Here a union 26 is used at each end 6 of tubing 2. Each union 26 has two ends with one of the two ends configured to be inserted within the lumen of tubing 2 at one end 6 of tubing 2 and the other end 6 of tubing 2 within the lumen of a connecting tubing 8. Therefore, unions may be used to connect heat exchange tubings to their connecting tubings if necessary. It is also conceivable to form an end of the union as a female end for insertion of a male end from an end of the heat exchange tubing or connecting tubing.

FIG. 11 is a partial cross-sectional view of a connection depicting a manner in which one end of a heat exchange tubing is connected to a connecting tubing of a heat exchanger. Here, a groove 24 is disposed in an inner surface of a female end of a first part to retain a sealing ring such that when the male end of a second part is inserted in sealing ring, a seal is formed to keep a flow 20 in the first and second parts contained while allowing the male end of the second part slide relative to the sealing ring 22.

FIG. 12 is a partial cross-sectional view of a connection depicting a manner in which one end of a heat exchange tubing is connected to a connecting tubing of a heat exchanger. Here, no grooves are used. However, a lip 48 that protrudes outwardly from the male end of a part and a lip 50 that protrudes inwardly from the female end of another part together aid in containing the sealing ring 22 between these two lips 48, 50.

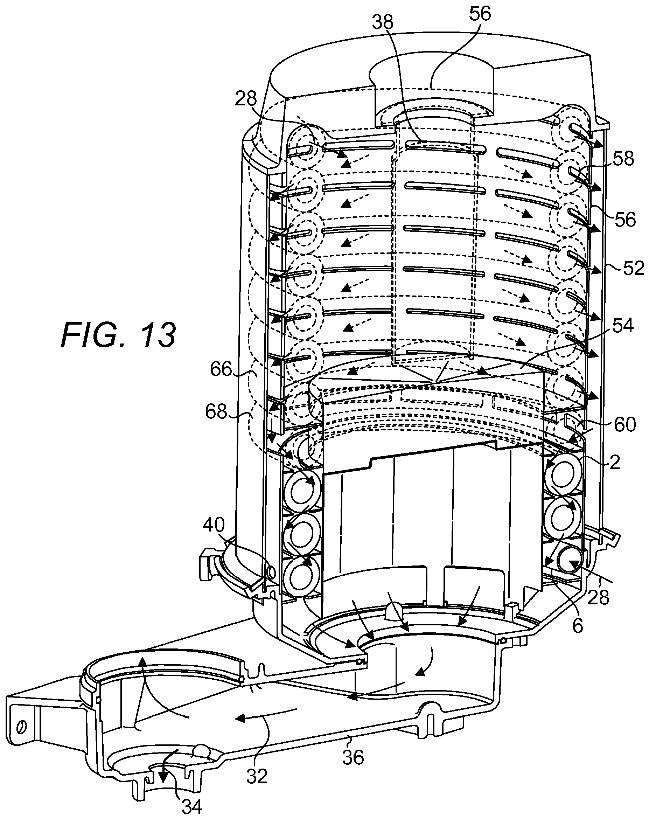

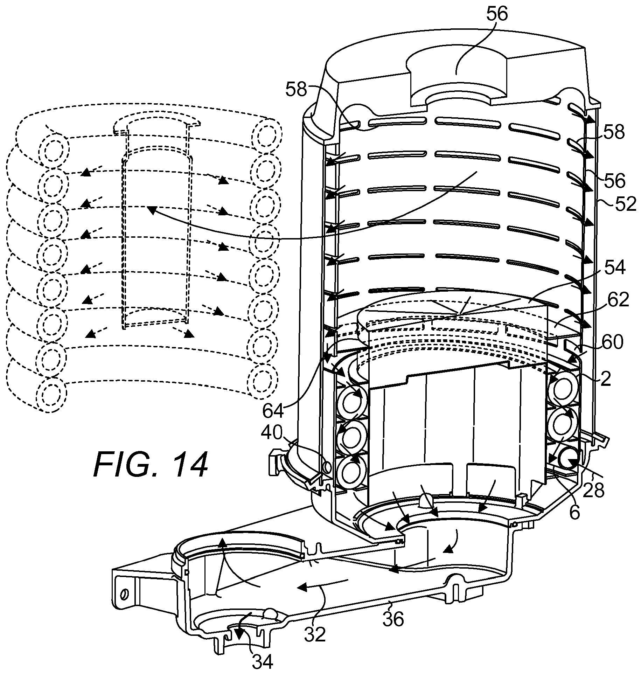

FIG. 13 is a partially transparent cross-sectional view of a heat exchanger, depicting a shroud 56 coupled with a heat exchange tubing to enhance heat transfer to fluid to be heated in the heat exchanger. FIG. 14 is a partially transparent cross-sectional view of a heat exchanger, depicting a shroud 56 coupled with a heat exchange tubing to enhance heat transfer to a fluid to be heated in the heat exchanger and with parts removed to more clearly reveal the shroud. Similar to the heat exchanger shown in FIG. 1, the heat exchanger is a coil 2 disposed upright in a control volume where a heated gas is supplied from the top about centrally into the lumen of the heat exchange tubing 2. In the embodiment shown, the heated gas is supplied by a burner 38. This configuration may also receive other sources of heated gas flow, e.g., heated gas flow generated from another heat source disposed inside and/or outside of the heat exchanger. For example, a heat source that is generated outside of the heat exchanger can be waste heat that is naturally occurring or generated by another process or device that is disposed outside of the heat exchanger. Without a shroud 56, a heated gas flow entering the lumen of the heat exchange tubing 2 would follow a path of the least resistance, largely bypassing coil loops at the upper section of the heat exchange tubing 2. The heat exchanger includes a coil including a top section, a bottom section, a top end, a bottom end and a lumen, the coil 2 configured for receiving the fluid flow 28, e.g., water flow, at one of the top end and bottom end of the coil and channeling the fluid flow 28 to the other one of the top end and bottom end, wherein the top section within the lumen is configured for receiving a heated gas urged to flow in a direction from the top end of the coil to the bottom end of the coil 2. In the embodiment shown, the fluid flow 28 enters at the bottom end of the coil 2 and exits at the top end of the coil 2. Note that there is provided a shroud 56 in which the coil 2 is disposed and that the shroud 56 is divided into two different volumes, an upper section outlined by the shelf 62 and the guide system 54. In one embodiment, there is further provided a seal disposed on an edge 64 of the shelf 62 butted against the guide system 54 to further prevent escape of the heated gas flow directly from the upper section to the lower section of the shroud therefore substantially isolating the upper section of the shroud from the lower section of the shroud. In one embodiment, the shelf 62 is an annular plate that is severed at one end and disposed between two consecutive coil loops 66, 68. Alternatively, absent a flue guide system 54, the upper section and lower section of the shroud 62 can be segregated using a continuous plate that covers the space vacated by the flue guide system 54. The shroud 56 includes a side wall having an upper section and a lower section and a plurality of openings, e.g., slits 58, holes or any combination thereof, disposed on the upper section of the side wall. For achieving the same amount of opening, slits are preferred compared to holes as they require less work to form or less linear distance in cuts made, e.g., via laser cutting or stamping. As the top section of the coil is disposed within the upper section of the shroud 56 and the plurality of openings is aligned with each coil loop of the top section of the coil 2, a portion of the heated gas is allowed to flow around the coil loop and through at least one of the plurality of openings to enter a space outside of the shroud 56 but contained by an outer shell 52. As a heated gas flow is not permitted to flow within the lumen of the coil 2 from the top section of the coil 2 to the bottom section of the coil, the heated gas must flow around each coil loop, making heat transfer evenly distributed among coil loops instead of being concentrated at one or two coil loops. A plurality of apertures 60 are disposed at the lower section of the side wall to allow the heated gas that exited the lumen of the upper section of the shroud 56 to reenter the lumen of the shroud 56 at the lower section of the shroud 56 to continue heating the bottom section of the coil.

A plurality of drain holes 40 (only one drain hole is shown) are disposed about the bottom edge of the shroud 56 to allow condensate that may collect between the outer shell 52 and the shroud 56 to enter the lumen of the shroud 56 and eventually be carried to the exhaust 36 and drained.

In shall be noted that the plurality of slits vary in size from the upper section of the side wall to the lower section of the side wall as slits spiral downwardly from the top of the side wall to the bottom of the side wall. The openings decrease in size from the upper section of the side wall to the lower section of the side wall. By disposing openings of decreasing size from the top end of the coil to the bottom end of the coil to coincide with coil loops, the heated gas flow around coil loops can be balanced in the upper section of the shroud, i.e., the rate of heated gas flow around each coil loop is roughly the same. If the openings had been the same for every coil loop, the heated gas flow would have occurred increasingly more readily through the coil loops closer to the exhaust of the heat exchange tubing 2 due to the lower pressure drop these coil loops would have exerted. The size of the openings 58 is inversely proportional to the pressure drop of the flow through it.

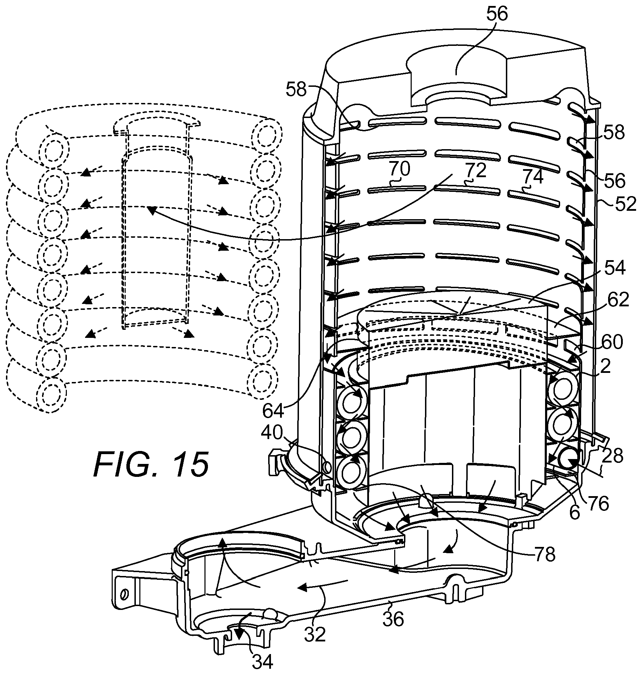

FIG. 15 is a cross-sectional view of yet another embodiment of a heat exchanger, depicting a shroud coupled with a heat exchange tubing to enhance heat transfer to a fluid to be heated in the heat exchanger and with parts removed to more clearly reveal the shroud. It shall be noted that the openings 74, 72, 70 decrease in size (or flow cross-sectional area) from right to left. Here, the exhaust extends from the bottom of the shroud to the left side of the heat exchanger. In this embodiment, the rate of heated gas flow around each coil loop is more even in the upper section of the shroud as compared to the embodiment shown in FIG. 13 and 14. Referring back to FIG. 14, the heated gas flow rate still tends to be larger on the half of shroud that is closer to the left side as the exhaust is pointed right to left in this example. In FIG. 15, as the slits decrease in size from right to left, the heated gas flow is encouraged to occur increasingly more readily through the slits from left to right. Upon entering the lower section of the shroud, the heated gas flow is now directed to flow downwardly through slits in annular plates that are not unlike plate 62, with the exception that slits are disposed in the plates below plate 62. Again, the slits decrease in size going from right to left as shall be noted in one end 78 of a plate as compared to the other end 76 of the plate.

The detailed description refers to the accompanying drawings that show, by way of illustration, specific aspects and embodiments in which the present disclosed embodiments may be practiced. These embodiments are described in sufficient detail to enable those skilled in the art to practice aspects of the present invention. Other embodiments may be utilized, and changes may be made without departing from the scope of the disclosed embodiments. The various embodiments can be combined with one or more other embodiments to form new embodiments. The detailed description is, therefore, not to be taken in a limiting sense, and the scope of the present invention is defined only by the appended claims, with the full scope of equivalents to which they may be entitled. It will be appreciated by those of ordinary skill in the art that any arrangement that is calculated to achieve the same purpose may be substituted for the specific embodiments shown. This application is intended to cover any adaptations or variations of embodiments of the present invention. It is to be understood that the above description is intended to be illustrative, and not restrictive, and that the phraseology or terminology employed herein is for the purpose of description and not of limitation. Combinations of the above embodiments and other embodiments will be apparent to those of skill in the art upon studying the above description. The scope of the invention is defined in the appended claims.

## Claims

1. A heat exchanger comprising:
(a) a fluid conductor comprising a heat exchange tubing (2) comprising a first end (6) and a lumen; and
(b) a first connecting tubing (8) comprising an outer surface, a lumen and a first sealing ring (22) disposed about said outer surface of said first connecting tubing (8), **characterised in that** said first connecting tubing (8) is configured for insertion into said lumen of said heat exchange tubing (2) at said first end (6) such that said first sealing ring (22) comes in sealing engagement with said first connecting tubing (8) and said heat exchange tubing (2) to thereby form a floating connection between said heat exchange tubing (2) at said first end (6) and said first connecting tubing (8), said floating connection allowing relative movement between said heat exchange tubing (2) and said first connecting tubing (8) when the heat exchange tubing (2) expands or contracts along at least its length when subjected to thermal fluctuations and a fluid flow is confined within a lumen formed of said lumen of said first connecting tubing (8) and said lumen of said heat exchange tubing (2).

2. The heat exchanger of claim 1, wherein said fluid conductor further comprises a second end (6) and said heat exchanger further comprises a second connecting tubing (8) comprising an outer surface and a second sealing ring (22) disposed about said outer surface of said second connecting tubing (8), wherein said second connecting tubing (8) is configured for insertion into said lumen of said heat exchange tubing (2) at said second end (6) such that said second sealing ring (22) comes in sealing engagement with said second connecting tubing (8) and said heat exchange tubing (2) to thereby form a floating connection between said heat exchange tubing (2) at said second end (6) and said second connecting tubing (8), said floating connection allowing relative movement between said heat exchange tubing (2) and said second connecting tubing (8) when the heat exchange tubing (2) expands or contracts along at least its length when subjected to thermal fluctuations and the fluid flow is confined within said second connecting tubing (8) and said heat exchange tubing (2).

3. The heat exchanger of claim 1 or claim 2, wherein said first connecting tubing (8) further comprises a central axis (46) and a groove disposed about said central axis (46) on said outer surface of said first connecting tubing (8), said groove configured for receiving and retaining said first sealing ring (22) in place to prevent relative motion of said first sealing ring (22) relative to said first connecting tubing (8).

4. The heat exchanger of any one of the preceding claims, wherein said heat exchange tubing (2) further comprises an outer surface and said heat exchange tubing (2) further comprises a plurality of fins (4) each extending from said outer surface of said heat exchange tubing (2).

5. The heat exchanger of claim 4, wherein each of said plurality of fins (4) comprises a thickness and a height and the thickness of at least one of said plurality of fins (4) is about 0.5 mm and the height of said at least one of said plurality of fins is no more than about 10 mm.

6. The heat exchanger of any one of the preceding claims, wherein said heat exchange tubing (2) further comprises a wall thickness of no more than about 1.2mm.

7. The heat exchanger of any one of the preceding claims, wherein said heat exchange tubing (2) and said plurality of fins (4) are constructed from the same material.

8. The heat exchanger of any one of the preceding claims, wherein said heat exchange tubing (2) is a helical coil.

## Patentansprüche

1. Wärmetauscher, umfassend:
(a) einen Fluidleiter, umfassend ein Wärmetauscherrohr (2), umfassend ein erstes Ende (6) und ein Lumen; und
(b) ein erstes Verbindungsrohr (8), umfassend eine Außenfläche, ein Lumen und einen ersten Dichtungsring (22), der um diese Außenfläche dieses ersten Verbindungsrohrs (8) herum angeordnet ist, **dadurch gekennzeichnet, dass** dieses erste Verbindungsrohr (8) zum Einführen in dieses Lumen dieses Wärmetauscherrohrs (2) an diesem ersten Ende (6) konfiguriert ist, sodass dieser erste Dichtungsring (22) in dichtenden Eingriff mit diesem ersten Verbindungsrohr (8) und diesem Wärmetauscherrohr (2) kommt, um dadurch eine schwimmende Verbindung zwischen diesem Wärmetauscherrohr (2) an diesem ersten Ende (6) und diesem ersten Verbindungsrohr (8) zu bilden, wobei diese schwimmende Verbindung eine relative Bewegung zwischen diesem Wärmetauscherrohr (2) und diesem ersten Verbindungsrohr (8) ermöglicht, wenn sich das Wärmetauscherrohr (2) zumindest entlang seiner Länge ausdehnt oder zusammenzieht, wenn es thermischen Schwankungen unterworfen ist, und ein Fluidstrom in einem Lumen eingeschlossen ist, das von diesem Lumen dieses ersten Verbindungsrohrs (8) und diesem Lumen dieses Wärmetauscherrohrs (2) gebildet wird.

2. Wärmetauscher nach Anspruch 1, worin dieser Fluidleiter weiterhin ein zweites Ende (6) umfasst und dieser Wärmetauscher weiterhin ein zweites Verbindungsrohr (8) umfasst, umfassend eine Außenfläche und einen zweiten Dichtungsring (22), der um diese Außenfläche dieses zweiten Verbindungsrohrs (8) angeordnet ist, worin dieses zweite Verbindungsrohr (8) zum Einführen in dieses Lumen dieses Wärmetauscherrohrs (2) an diesem zweiten Ende (6) konfiguriert ist, sodass dieser zweite Dichtungsring (22) in dichtenden Eingriff mit diesem zweiten Verbindungsrohr (8) und diesem Wärmetauscherrohr (2) kommt, um dadurch eine schwimmende Verbindung zwischen diesem Wärmetauscherrohr (2) an diesem zweiten Ende (6) und diesem zweiten Verbindungsrohr (8) zu bilden, wobei diese schwimmende Verbindung eine relative Bewegung zwischen diesem Wärmetauscherrohr (2) und diesem zweiten Verbindungsrohr (8) ermöglicht, wenn sich das Wärmetauscherrohr (2) zumindest entlang seiner Länge ausdehnt oder zusammenzieht, wenn es thermischen Schwankungen unterworfen ist, und der Fluidstrom innerhalb dieses zweiten Verbindungsrohrs (8) und dieses Wärmetauscherrohrs (2) eingeschlossen ist.

3. Wärmetauscher nach Anspruch 1 oder Anspruch 2, worin dieses erste Verbindungsrohr (8) weiterhin eine zentrale Achse (46) und eine um diese zentrale Achse (46) auf dieser Außenfläche dieses ersten Verbindungsrohrs (8) angeordnete Nut umfasst, wobei diese Nut zum Aufnehmen und Halten dieses ersten Dichtungsrings (22) konfiguriert ist, um eine relative Bewegung dieses ersten Dichtungsrings (22) gegenüber diesem ersten Verbindungsrohr (8) zu verhindern.

4. Wärmetauscher nach einem der vorhergehenden Ansprüche, worin dieses Wärmetauscherrohr (2) weiterhin eine Außenfläche umfasst und dieses Wärmetauscherrohr (2) weiterhin eine Vielzahl von Rippen (4) umfasst, die sich jeweils von dieser Außenfläche dieses Wärmetauscherrohrs (2) aus erstrecken.

5. Wärmetauscher nach Anspruch 4, worin jede dieser Vielzahl von Rippen (4) eine Dicke und eine Höhe umfasst und die Dicke von mindestens einer dieser Vielzahl von Rippen (4) etwa 0,5 mm und die Höhe von mindestens einer dieser Vielzahl von Rippen nicht mehr als etwa 10 mm beträgt.

6. Wärmetauscher nach einem der vorhergehenden Ansprüche, worin dieses Wärmetauscherrohr (2) weiterhin eine Wanddicke von nicht mehr als etwa 1,2 mm umfasst.

7. Wärmetauscher nach einem der vorhergehenden Ansprüche, worin dieses Wärmetauscherrohr (2) und diese Vielzahl von Rippen (4) aus demselben Material hergestellt sind.

8. Wärmetauscher nach einem der vorhergehenden Ansprüche, worin dieses Wärmetauscherrohr (2) eine spiralförmige Wicklung ist.

## Revendications

1. Un échangeur de chaleur comprenant :
(a) un conducteur de fluide comportant un tube d'échange de chaleur (2) comprenant une première extrémité (6) et une lumière ; et
(b) un premier tube de raccordement (8) comportant une surface extérieure, une lumière et une première bague d'étanchéité (22) disposée sur ladite surface extérieure dudit premier tube de raccordement (8), **caractérisé en ce que** ledit premier tube de raccordement (8) est configuré pour une insertion dans ladite lumière dudit tube d'échange de chaleur (2) à ladite première extrémité (6) de façon à ce que ladite première bague d'étanchéité (22) s'engage de façon étanche avec ledit premier tube de raccordement (8) et ledit tube d'échange de chaleur (2) pour ainsi former une connexion flottante entre ledit tube d'échange de chaleur (2) à ladite première extrémité (6) et ledit premier tube de raccordement (8), ladite connexion flottante permettant un mouvement relatif entre ledit tube d'échange de chaleur (2) et ledit premier tube de raccordement (8) lorsque le tube d'échange de chaleur (2) se dilate ou se contracte le long de sa longueur au moins lorsqu'il est soumis à des fluctuations thermiques et un écoulement de fluide est confiné dans une lumière formée de ladite lumière dudit premier tube de raccordement (8) et ladite lumière dudit tube d'échange de chaleur (2).

2. L'échangeur de chaleur de la revendication 1, dans lequel ledit conducteur de fluide comprend en outre une deuxième extrémité (6) et ledit échangeur de chaleur comprend en outre un deuxième tube de raccordement (8) comportant une surface extérieure et une deuxième bague d'étanchéité (22) disposée sur ladite surface extérieure dudit deuxième tube de raccordement (8), dans lequel ledit deuxième tube de raccordement (8) est configuré pour une insertion dans ladite lumière dudit tube d'échange de chaleur (2) à ladite deuxième extrémité (6) de façon à ce que ladite deuxième bague d'étanchéité (22) s'engage de façon étanche avec ledit deuxième tube de raccordement (8) et ledit tube d'échange de chaleur (2) pour former une connexion flottante entre ledit tube d'échange de chaleur (2) à ladite deuxième extrémité (6) et ledit deuxième tube de raccordement (8), ladite connexion flottante permettant un mouvement relatif entre ledit tube d'échange de chaleur (2) et ledit deuxième tube de raccordement (8) lorsque le tube d'échange de chaleur (2) se dilate ou se contracte le long de sa longueur au moins lorsqu'il est soumis à des fluctuations thermiques et l'écoulement de fluide est confiné dans ledit deuxième tube de raccordement (8) et ledit tube d'échange de chaleur (2).

3. L'échangeur de chaleur de la revendication 1 ou de la revendication 2, dans lequel le dit premier tube de raccordement (8) comporte en outre un axe central (46) et une rainure disposée sur ledit axe central (46) sur ladite surface extérieure dudit premier tube de raccordement (8), ladite rainure étant configurée pour recevoir et retenir ladite première bague d'étanchéité (22) en place afin d'empêcher le mouvement relatif de ladite première bague d'étanchéité (22) par rapport audit premier tube de raccordement (8).

4. L'échangeur de chaleur de l'une quelconque des revendications précédentes, dans lequel ledit tube d'échange de chaleur (2) comporte en outre une surface extérieure et ledit tube d'échange de chaleur (2) comporte en outre une pluralité d'ailettes (4) chacune s'étendant de ladite surface extérieure dudit tube d'échange de chaleur (2).

5. L'échangeur de chaleur de la revendication 4, dans lequel chacune de ladite pluralité d'ailettes (4) comporte une épaisseur et une hauteur et l'épaisseur d'au moins une de ladite pluralité d'ailettes (4) est d'environ 0,5 mm et la hauteur d'au moins une de ladite pluralité d'ailettes ne dépasse pas environ 10 mm.

6. L'échangeur de chaleur de l'une quelconque des revendications précédentes, dans lequel ledit tube d'échange de chaleur (2) comporte en outre une épaisseur de paroi ne dépassant pas environ 1,2 mm.

7. L'échangeur de chaleur de l'une quelconque des revendications précédentes, dans lequel ledit tube d'échange de chaleur (2) et ladite pluralité d'ailettes (4) sont construits à partir du même matériau.

8. L'échangeur de chaleur de l'une quelconque des revendications précédentes, dans lequel ledit tube d'échange de chaleur (2) est un enroulement hélicoïdal.
